# EUROPEAN PATENT APPLICATION

(11) **EP 1 792 881 A1**
(43) Date of publication of application: **06.06.2007**
(21) Application number: 06125316.7
(22) Date of filing: 04.12.2006
(51) Int. Cl.: C04B 35/468, H01G 4/12

(54) **Dielectric ceramic composition, electronic device, and multilayer ceramic capacitor**

(30) Priority: 05.12.2005 JP 2005351288
(71) Applicant: TDK Corporation, Tokyo 103-8272 (JP)
(72) Inventor: Ito, Kazushige, Tokyo 103-8272 (JP); Sato, Akira, Tokyo 103-8272 (JP); Yoshii, Akitoshi, Tokyo 103-8272 (JP); Okabe, Masayuki, Tokyo 103-8272 (JP); Takeda, Atsushi, Tokyo 103-8272 (JP); Shinkawa, Takaki, Toyko 103-8272 (JP)
(74) Representative: Vossius & Partner

(57) **Abstract**

A dielectric ceramic composition including dielectric particles and grain boundary phases present among these dielectric particles, wherein when measuring a concentration of Si and/or element "A" contained in the grain boundary phases (where, "A" is at least one element selected from cationic elements with an effective ion radius in sixfold coordination of 0.065 nm to 0.085 nm), the concentration of the Si and/or element "A" disperses depending on the position in the grain boundary phases, and the dispersion of the concentration of Si and/or element "'A" in the grain boundary phases is, in terms of CV value, larger than 10% and less than 58%. According to the present invention, a dielectric ceramic composition and an electronic device excellent in capacity-temperature characteristic while realizing a good high temperature accelerated life can be realized.

## Description

The present invention relates to a dielectric ceramic composition, electronic device, and multilayer ceramic capacitor, more specifically relates to a dielectric ceramic composition varying the concentration of specific elements present at the grain boundaries of the dielectric particles forming the dielectric ceramic composition so as to obtain a good capacity-temperature characteristic and high temperature accelerated life in a good balance.

In recent years, electronic apparatuses have been rapidly made smaller in size and higher in performance. The electronic devices mounted in these electronic apparatuses are therefore also being required to be made smaller in size and higher in performance. As the characteristics required from multilayer ceramic capacitors, one example of an electronic device, a high dielectric constant, a long insulation resistance (IR) life, a good DC bias characteristic, and also a good temperature characteristic etc. may be mentioned.

Further, multilayer ceramic capacitors are being used not only in general electronic apparatuses, but also in engine electronic control units (ECU), crank angle sensors, antilock braking system (ABS) modules, or other various types of electronic apparatuses mounted in automobile engine compartments.

The environment in which these electronic apparatuses are used falls in the winter in cold regions to as low as -20°C or less. Further, after engine startup, in the summer, the temperature can be expected to rise to +130°C or more. Recently, further, the wire harnesses connecting such electronic apparatuses and the equipment they control have been slashed and the electronic apparatuses have even been set outside the vehicles, so the environment of these electronic apparatuses has become even harsher. Therefore, the capacitors used in these electronic apparatuses are required to have flat temperature characteristics in a broad temperature range. Specifically, a dielectric ceramic composition must satisfy not only the X7R characteristic of the EIA standard (-55 to 125°C, ΔC/C=±15% or less), but also the X8R characteristic of the EIA standard (-55 to 150°C, ΔC/C=±15% or less).

As dielectric ceramic compositions satisfying the X8R characteristic, various proposals have been made. For example, the assignee proposed in Japanese Patent Application (A) No. 2004-250941 a dielectric ceramic composition which introduces an oxide of an element having an effective ion radius in sixfold coordination into a dielectric ceramic composition satisfying the X8R characteristic so as to satisfy the X8R characteristic and further improve the IR (insulation resistance) temperature dependency.

On the other hand, to realize a longer high temperature accelerated life, the action of the grain boundary phase as an insulating part is being looked at.

For example, Japanese Patent Publication (A) No. 2001-284156 discloses to dissolve a transition metal or rare earth metal into solid solution at a grain boundary glass phase to improve the life. Further, Japanese Patent Publication 2001-307939 discloses to cover ceramic particles at the grain boundary parts at which transition metals are dissolved in solid solution so as to improve the life.

However, these prior art often improve one characteristic, but degrade another characteristic, i.e., involve opposing relationships. Therefore, obtain good characteristics in an opposing relationship with a good balance is being sought.

An object of the present invention is to provide a dielectric ceramic composition good in capacity-temperature characteristic while realizing a longer high temperature accelerated life. Another object of the present invention is to provide a multilayer ceramic capacitor or other electronic device produced using this dielectric ceramic composition.

The inventors, to achieve these objects, discovered that by dispersing the concentrations of specific elements present in the grain boundary phase, it is possible to maintain the capacity-temperature characteristic while improving the high temperature accelerated life and thereby completed the present invention.

That is, the dielectric ceramic composition according to the present invention is a dielectric ceramic composition including dielectric particles and grain boundary phases present between these dielectric particles, wherein when measuring a concentration of Si and/or element "A" contained in grain boundary phases (where, "A" is at least one element selected from cationic elements with an effective ion radius in sixfold coordination of 0.065 nm to 0.085 nm), the concentration of the Si and/or element "A" disperses depending on the position in the grain boundary phases, and the dispersion of the concentration of Si and/or element "A" in the grain boundary phases is, in terms of CV value, larger than 10% and less than 58%, more preferably 20 to 50%.

The grain boundary phases are usually comprised of a glass or glassy substance. Among the ingredients, the contents of specific elements have an effect on the characteristics important to dielectric ceramic compositions such as the high temperature accelerated life or capacity-temperature characteristic. However, these characteristics often have opposite relations with the contents of specific elements. For example, Si improves the sinterability, but if too large in content causes a drop in the dielectric constant.

In the present invention, by introducing as specific elements the above-mentioned Si and/or element "A" (where, "A" is at least one element selected from cationic elements with an effective ion radius in sixfold coordination of 0.065 nm to 0.085 nm) into the grain boundaries and varying their concentration, a good capaoity-ternperature characteristic and high temperature load life can be obtained with a good balance. That is, by controlling a dispersion of concentration of the Si and/or element "A" present at the grain boundary phases within the above-mentioned range of CV value, a good temperature characteristic can be maintained while realizing a good high temperature accelerated life.

Preferably, the element "A" is at least one element selected from Al, Cr, Ga, and Ge.

Preferably, the concentration of the Si and/or element "A" is measured at the grain boundary phases present around the dielectric particles exhibiting a value of the average particle size D50.

The electronic device according to the present invention has dielectric layers formed by the above dielectric ceramic composition. The electronic device is not particularly limited, but a multilayer ceramic capacitor, piezoelectric device, chip inductor, chip varistor, chip thermistor, chip resistor, or other surface mounted device (SMD) chip type electronic device may be mentioned.

The multilayer ceramic capacitor according to the present invention is comprised of dielectric layers made of the above dielectric ceramic composition and internal electrode layers alternately stacked.

These and other objects and features of the present invention will become clearer from the following description of the preferred embodiments given with reference to the attached drawings, wherein:
FIG. 1 is a schematic cross-sectional view of a multilayer ceramic capacitor according to an embodiment of the present invention;
FIG. 2 is a cross-sectional view of principal parts of a dielectric layer, shown in FIG. 1, having dielectric particles and grain boundary phases; and
FIG. 3 is a schematic view explaining the method of calculation of the CV value in the examples.

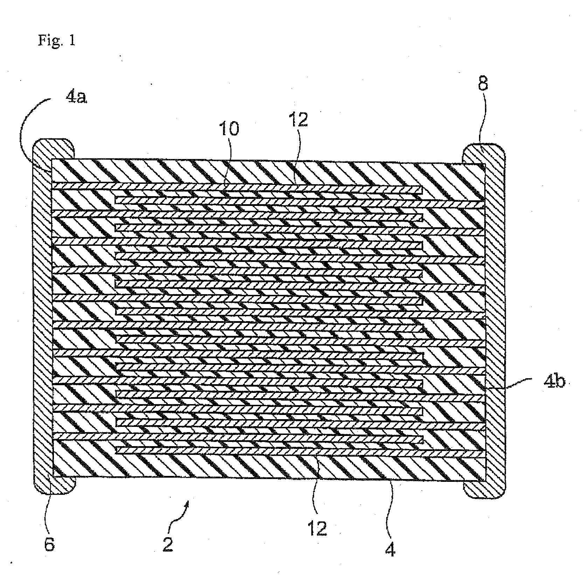

As shown in FIG. 1, according to an embodiment of the present invention, the multilayer ceramic capacitor 2 has a capacitor body 4 comprised of dielectric layers 10 and internal electrode layers 12 alternately stacked. Every other internal electrode layer 12 is electrically connected to an inside of a first terminal electrode 6 formed at the outside of a first end 4a of the capacitor body 4. Further, the remaining internal electrode layers 12 are electrically connected to the inside of a second terminal electrode 8 formed at the outside of a second end 4b of the capacitor body 4.

The shape of the capacitor body 4 is not particularly limited and may be suitably selected in accordance with the objective and application, but usually is a rectangular parallelopiped. The dimensions are also not limited and may be suitably selected in accordance with the objective and application. Usually, they are a length of 0.4 to 5.6 mm, a width of 0.2 to 5.0 mm, and a height of 0.2 to 1.9 mm or so.

### Dielectric Layers

The dielectric layers 10 are made from the dielectric ceramic composition of the present invention. The thickness of the dielectric layers 10 should be suitably determined in accordance with the objective and application, but is preferably 10 µm or less, more preferably 7 µm or less.

The dielectric ceramic composition forming the dielectric layers 10 is not particularly limited, but for example, the following compositions may be mentioned.

The dielectric ceramic composition has a main ingredient containing barium titanate (preferably expressed by the formula BaₘTiO₂₊ₘ, where m is 0.995≤m≤1.010 and the ratio of Ba and Ti is 0.995≤Ba/Ti≤1.010), a first sub ingredient containing at least one oxide selected from MgO, CaO, BaO, and SrO, a second sub ingredient containing at least one oxide selected from an oxide of Si and/or element "A" (where "A" is at least one element selected from cationic elements with an effective ion radius in sixfold coordination of 0. 065 nm to 0.085 nm), a third sub ingredient containing at least one oxide selected from V₂O₅, MoO₃, and WO₃, a fourth sub ingredient containing an oxide of R1 (wherein R1 is at least one element selected from Sc, Er, Tm, Yb, and Lu), a fifth sub ingredient containing an oxide of R2 (wherein R2 is at least one element selected from Y, Dy, Ho, Tb, Gd, and Eu), a sixth sub ingredient containing CaZrO₃ or CaO+ZrO₂ in accordance with need, and a seventh sub ingredient containing MnO in accordance with need. The ratios of the sub ingredients with respect to the main ingredient BaTiO₃ are, with respect to 100 moles of BaTiO₃,
first sub ingredient: 0.1 to 3 moles,
second sub ingredient: 2 to 10 moles,
third sub ingredient: 0.01 to 0.5 mole,
fourth sub ingredient: 0.5 to 7 moles,
fifth sub ingredient: 0≤fifth sub ingredient≤9 moles,
sixth sub ingredient: 5 moles or less, and
seventh sub ingredient: 0.5 mole or less,
preferably,
first sub ingredient; 0.1 to 2.5 moles,
second sub ingredient: 3 to 8 moles,
third sub ingredient: 0.1 to 0.4 mole,
fourth sub ingredient: 0.5 to 5.0 moles,
fifth sub ingredient: 0.5 to 9 mole,
sixth sub ingredient: 0.5 to 3 moles, and
seventh sub ingredient: 0.01 to 0.5 mole.

Note that the ratios of the fourth and fifth sub ingredients are not the molar ratios of the oxides of R1 and R2, but the molar ratios of the R1 and R2 alone. That is, for example, when using a fourth sub ingredient comprised of an oxide of Yb, a ratio of the fourth sub ingredient of 1 mole means not that the ratio of Yb₂O₃ is 1 mole, but that the ratio of Yb is 1 mole.

By incorporating the first to fifth sub ingredients, the XBR characteristic can be satisfied. In accordance with need, the sixth and the seventh sub ingredients may also be incorporated.

The first sub ingredient (MgO, CaO, BaO, and SrO) exhibits the effect of flattening the capacity-terrperature characteristic. If the first sub ingredient is too small in content, the rate of capacity-temperature change ends up becoming large. On the other hand, if the content is too large, the sinterability deteriorates. Note that the ratio of the oxides of the first sub ingredient may be any ratio.

The oxide of Si contained as the second sub ingredient has a large role mainly as a sintering aid, but also has an effect of reducing the defect rate of the initial insulation resistance when reducing the thickness of the dielectric layers.

On the other hand, an oxide of the element "A" does not have that much of an effect on the capacity-temperature characteristic and has an effect of improving the IR temperature dependency. The group of cationic ion elements of "A" include I (0.067 nm), Ge (0.067 nm), Al (0.0675 nm), Cu (0.068 nm), Fe (0.069 nm), Ni (0.070 nm), Au (0.071 nm), As (0.072 nm), Cr (0.0755 nm), Ga (0.076 nm), At (0.076 nm), Os (0.077 nm), Nb (0.078 nm), Ta (0.078 nm), Co (0.079 nm), Rh (0.080 nm), Ir (0.082 nm), Ru (0.082 nm), and Sn (0.083 nm). Note that the numerical values in parentheses indicate the effective ion radius in sixfold coordination. The same is true below.

Among the group of cationic ion elements, an element with an effective ion radius in sixfold coordination of 0.067 to 0.076 nm is preferably used. This preferable group of elements includes I, Ge, Al, Cu, Fe, Ni, Au, As, Cr, Ga, and At. At least one element selected from these is used. More preferably Al, Cr, Ga, and Ge are used.

The content of the second sub ingredient is, in terms of value converted to an oxide of A with respect to 100 moles of the main ingredient, 2 to 10 moles, preferably 3 to 8 moles, more preferably 4 to 7 moles. If the second sub ingredient is too small in content, the capacity-temperature characteristic and IR deteriorate and the effect of improvement of the IR temperature dependency becomes insufficient. On the other hand, if too large in content, the IR life becomes insufficient and the capacity- temperature characteristic or dielectric constant tends to deteriorate.

The oxide of Si is preferably SiO₂, more preferably (Ba, Ca)ₓSiO₂₊ₓ (where, x=0.7 to 1.2). The BaO and CaO in the [(Ba,Ca)ₓSiO₂₊ₓ] are also included in the first sub ingredient, but the complex oxide (Ba,Ca)ₓSiO₂₊ₓ has a low melting point, so the reactivity with the main ingredient is good. Therefore, in the present invention, BaO and/or CaO are preferably added as a complex oxide as well. The x in the (Ba,Ca)ₓ SiO₂₊ₓ is preferably 0.7 to 1.2, more preferably 0.8 to 1.1. If x is too small, that is, if the ratio of SiO₂ is too large, this reacts with the main ingredient BaTiO₃ and ends up causing the dielectric characteristic to deteriorate. On the other hand, if the x is too large, the melting point of (Ba,Ca)ₓSiO₂₊ₓ becomes high and the sinterability is degraded, so this is not preferable. Note that the ratio of Ba and Ca may be any ratio. Just one alone may also be contained. Further, as oxides of Al, Cr, Ga, and Ge, Al₂O₃, Cr₂O₃, Ga₂O₃, and GeO₂ are preferable.

The third sub ingredient (V₂O₅, MoO₃, and WO₃) exhibits the effect of flattening the capacity-temperature characteristic at the Curie temperature or more and the effect of improving the IR life. If the third sub ingredient is too small in content, such effects become insufficient. On the other hand, if the content is too large, the IR remarkably falls. Note that the ratio of the oxides of the third sub ingredient may be any ratio.

The fourth sub ingredient (oxide of R1) exhibits the effect of shifting the Curie temperature to the high temperature side and the effect of flattening the capacity-temperature characteristic. If the fourth sub ingredient is too small in content, such effects become insufficient and the capacity-temperature characteristic ends up deteriorating. On the other hand, if the content is too large, the sinterability tends to deteriorate. Among the fourth sub ingredients, due to its high effect of improvement of the characteristics and its inexpensive cost, an oxide of Yb is preferable.

The fifth sub ingredient (oxide of R2) exhibits the effect of improving the IR and IR life and has little detrimental effect on the capacity-temperature characteristic. However, if the R2 oxide is too large in content, the sinterability tends to deteriorate. Among the fifth sub ingredients, due to the high effect in improving the characteristics and inexpensive cost, an oxide of Y is preferable.

The sixth sub ingredient (CaZrO₃) has the effect of shifting the Curie temperature to the high temperature side and the effect of flattening the capacity-temperature characteristic. However, if the sixth sub ingredient is too large in content, the IR accelerated life remarkably deteriorates and the capacity-temperature characteristic (X8R characteristic) ends up deteriorating.

By adjusting the contents of the fourth sub ingredient (oxide of R1) and the sixth sub ingredient (CaZrO₃), it is possible to flatten the capacity-temperature characteristic (X8R characteristic) and improve the high temperature accelerated life. In particular, in the above-mentioned range of numerical values, precipitation of different phases is suppressed and the structure can be made uniform. If the fourth sub ingredient is too large in content, giant needle-shaped crystals, that is, a pyrochlora phase, easily precipitates and remarkable deterioration in characteristics is observed when reducing the thickness between the dielectric layers of the multilayer ceramic capacitor. On the other hand, if the fourth sub ingredient is too small in content, the capacity-temperature characteristic can no longer be satisfied. If the sixth sub ingredient is too large in content, the capacity-temperature characteristic becomes worse and the IR accelerated life also deteriorates.

The seventh sub ingredient (MnO) exhibits an effect of promoting sintering, an effect of raising the IR, and an effect of improving the IR life. To sufficiently obtain such effects, the ratio of the seventh sub ingredient to 100 moles of BaTiO₃ is made 0.01 mole or more. However, if the seventh sub ingredient is too large in content, the capacity-temperature characteristic is detrimentally affected, so preferably the content is 0.5 mole or less.

The total content of the fourth sub ingredient and fifth sub ingredient is, with respect to 100 moles of the main ingredient BaTiO₃, preferably 13 moles or less, further preferably 10 moles or less (however, the numbers of moles of the fourth sub ingredient and fifth sub ingredient are ratios of R1 and R2 alone), This is to maintain a good sinterability.

Note that when at least one element of Sr, Zr, and Sn is substituted for the Ba or Ti in the main ingredient forming the perovskite structure, the Curie temperature shifts to the low temperature side, so the capacity-temperature characteristic above 125°C becomes worse. For this reason, it is preferable not to use a BaₘTiO₂₊ₙ including these elements (for example (Ba, Sr) TiO₃) as the main ingredient. However, there is no particular problem if the content is of a level contained as an impurity (0.1 mole% or so or less of dielectric ceramic composition as a whole).

Note that the ion radius described in the specification is the value based on "R. D. Shannon, Acta Crystallogr., A32, 751 (1976)".

### Structure of Dielectric Particles

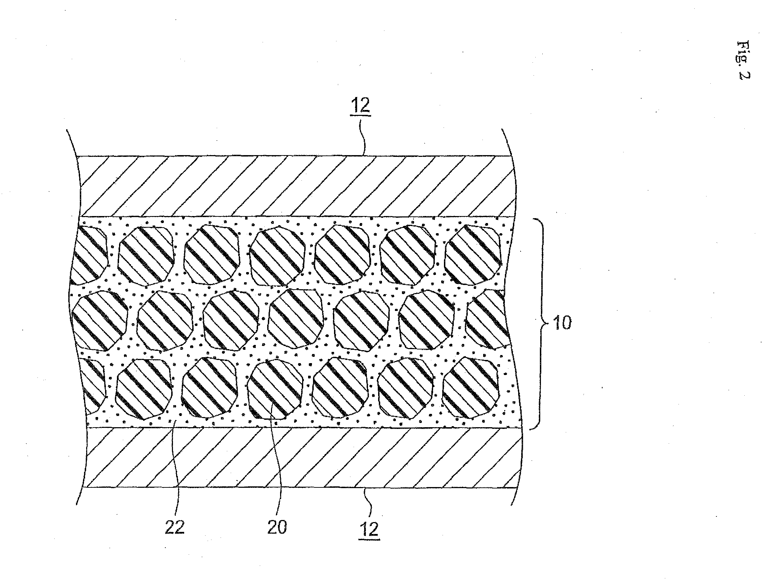

The dielectric layers 10 including the above dielectric ceramic composition, as shown in FIG. 2, are comprised of dielectric particles 20 and grain boundary phases 22 formed between the adjoining dielectric particles.

The grain boundary phases 22 are usually comprised of insulators of glass or glassy substances made of oxides of the substances forming the dielectric material or internal electrode material or oxides of the separately added substances and further oxides of the substances entering as impurities in the production process. Therefore, the thickness of the grain boundary phases, the difference in concentration of the glass ingredients, etc. have an effect on the insulation resistance and, as a result, have an effect on the capacity-temperature characteristic, IR life, and other important characteristics.

In the present embodiment, note is taken of the elements of the second sub ingredient present at the grain boundary phases 22, but the second sub ingredient may also be present in the dielectric particles 20.

The CV value is calculated by the method explained below. First, a plurality of any points are selected at the grain boundary phases around the dielectric particles 20 and the elements of the above-mentioned second sub ingredient are point analyzed. This measurement was performed a predetermined number of times. The standard deviation σ and average value x are found for all of the measured element concentrations and the CV value = (σ/x)×100 (%) is calculated. The CV value for the Si and element "A" is larger than 10% and less than 58%, more preferably 20 to 50%. In the present invention, if the CV value is too small, the capacity-temperature characteristic deteriorates, while if too large, the high temperature accelerated life tends to deteriorate.

The dielectric particles selected when measuring the concentrations of elements present at the grain boundary phase are not particularly limited, but dielectric particles exhibiting a value of the average particle size D50 of the dielectric particles are preferably measured.

The particle size of a dielectric particle is the value obtained when slicing open a capacitor device body 4 in the stacking direction of the dielectric layers 10 and internal electrode layers 12, measuring the average area of the dielectric particles in the cross-section shown in FIG. 2, calculating the circle equivalent diameter as the diameter, and multiplying this by 1.5. This is measured for at least 200 dielectric particles. The value where the cumulative total becomes 50% from the distribution of the cumulative total number of obtained particle sizes is defined as the average particle size D50 (unit: µm).

The D50 is not particularly limited in the present embodiment, but should be suitably determined from for example 0.1 to 3 µm in range in accordance with the thickness of the dielectric layers 10 etc. The capacity-temperature characteristic deteriorates the thinner the dielectric layers 10 and, further, tends to deteriorate the smaller the average particle size D50 of the dielectric particles. For this reason, the dielectric ceramic composition of the present invention is particularly effective when it is necessary to reduce the average particle size, specifically, when the average particle size is 0.1 to 0.5 µm. Further, if the average particle size is made smaller, the IR life becomes longer and, further, there is less change in the capacity over time under a DC field, so from this viewpoint as well, a small average particle size is preferable.

### Internal Electrode Layers

The conductive material included in the internal electrode layers 12 is not particularly limited, but since the material forming the dielectric layers 10 has resistance to reduction, a base metal can be used. As the base metal used as the conductive material, Ni or an Ni alloy is preferable. As the Ni alloy, an alloy of at least one element selected from Mn, Cr, Co, and Al with Ni is preferable. A content of Ni in the alloy of 95 wt% or more is preferable.

Note that the Ni or Ni alloy may also contain P and various other types of trace ingredients in amounts of 0.1 wt% or so or less.

The thickness of the internal electrode layers may be suitably set in accordance with the application etc., but usually is 0.5 to 5 µm. In particular, 0.5 to 1.5 µm or so is preferable.

### Terminal Electrodes

The conductive material contained in the terminal electrodes 6 and 8 is not particularly limited, but in the present invention, the inexpensive Ni or Cu and their alloys may be used. Further, the thickness of the terminal electrodes 6 and 8 may be suitably determined in accordance with the application etc., but usually 10 to 50 µm or so is preferable.

### Method of Production of Multilayer Ceramic Capacitor

The multilayer ceramic capacitor using the dielectric ceramic composition of the present invention is produced in the same way as a conventional multilayer ceramic capacitor by preparing a green chip using a paste by the usual printing method or sheet method, firing this, then printing or transferring and firing terminal electrodes. Below, the method of production will be specifically explained.

First, the dielectric material powder to be contained in the dielectric layer paste is prepared and formed into a paste to prepare the dielectric layer paste. The dielectric layer paste may be an organic-based paste comprised of the dielectric material powder and an organic vehicle kneaded together or a water-based paste.

As the dielectric material powder, the above oxides or their mixtures or complex oxides may be used, but it is also possible to use, in addition to the above oxides, various types of compounds giving those oxides or complex oxides upon firing, such as carbonates, oxalates, nitrates, hydroxides, organometallic compounds, etc. selected and mixed together.

In this specification, the oxides forming the main ingredient and the sub ingredients are expressed by stoichiochemical compositions, but the oxidized states of the oxides may also deviate from the stoichiochemical compositions. The ratios of the sub ingredients are found by converting the amounts of metals contained in the oxides forming the sub ingredients to oxides of the above stoichemical compositions.

The dielectric material powder mixed in the predetermined ratio is calcined to control the CV value. A first method is to divide the dielectric material into suitable amounts, calcine them under different conditions, then mix them after calcining. A second method is to perform first calcining during which only adding part of the sub ingredient and then perform second calcining during which adding the remaining sub ingredient. With both methods, the CV value showing the variation in average diffusion depths of the different elements can be controlled. In the state before conversion into a paste, the particle size of the dielectric ceramic composition powder is usually an average particle size of 0.1 to 1.0 µm or so.

The "organic vehicle" is comprised of a binder dissolved in an organic solvent. The binder used for the organic vehicle is not particularly limited, but may be suitably selected from ethyl cellulose, polyvinyl butyral, and other usual types of binders. Further, the organic solvent used is not particularly limited, but may be suitably selected from terpineol, butyl carbitol, acetone, toluene, or other various types of organic solvents in accordance with the printing method, sheet method, or other method of use.

Further, when making the dielectric layer paste a water-based paste, it is sufficient to knead together a water-based vehicle comprised of a water-soluble binder or dispersant etc. dissolved in water and the dielectric material. The water-soluble binder used for the water-based vehicle is not particularly limited, but for example, polyvinyl alcohol, cellulose, water-soluble acrylic resin, etc. may be used.

The internal electrode layer paste is prepared by kneading a conductive material comprised of the above various types of conductive metals or alloys or various types of oxides, organometallic compounds, resinate, etc. giving the conductive material after firing with the above organic vehicle. Further, the terminal electrode paste may be prepared in the same way as the above internal electrode layer paste.

The content of the organic vehicle in the paste is not particularly limited and may be made a usual content, for example, a 1 to 5 wt% or so of a binder and 10 to 50 wt% or so of a solvent. Further, the paste may contain, in accordance with need, various types of additives selected from dispersants, plasticizers, dielectrics, insulators. The total content of these is preferably 10 wt% or less.

When using the printing method, the dielectric layer paste and internal electrode layer paste are successively printed on a PET or other substrate which is then cut into predetermined shapes. Each assembly is then peeled off from the substrate to obtain a green chip.

Further, when using the sheet method, the dielectric layer paste is used to form green sheets, an internal electrode layer paste is printed on the sheets, then the sheets are stacked to obtain a green chip.

Before firing, the green chip is treated to remove the binder. The binder removal treatment may be suitable determined in accordance with the type of the conductive material in the internal electrode layer paste.

Further, as other binder removal conditions, the rate of temperature rise is preferably 5 to 300°C/hour, the holding temperature is preferably 180 to 400°C, and the temperature holding time is preferably 10 to 100 hours. Further, the firing atmosphere is preferably the air or a reducing atmosphere. As the atmosphere gas in the reducing atmosphere, for example a mixed gas of N₂ and H₂ which is wetted is preferable.

The atmosphere of firing the green chip may be suitably selected in accordance with the type of the conductive material in the internal electrode layer paste, but when using Ni, an Ni alloy, or other base metal as the conductive material, the firing atmosphere preferably has an oxygen partial pressure of 10⁻¹² to 10⁻⁸ atm. If the oxygen partial pressure is too low, the conductive material of the internal electrode layers sinters abnormally and the electrodes sometimes break. Further, if too high, internal electrode layers tend to oxidize.

Further, the holding temperature of firing is preferably 1100 to 1400°C. If the holding temperature is too low, the densification becomes insufficient, while if too high, abnormal sintering of the internal electrode layers causes electrode breakage or diffusion of the material of the internal electrode layers causes the capacity-temperature characteristic to deteriorate and the dielectric ceramic composition to easily be reduced.

As other firing conditions, the rate of temperature rise is preferably 50 to 500°C/hour, the temperature holding time is preferably 0.5 to 8 hours, and the cooling rate is preferably 50 to 500°C/hour. Further, the firing atmosphere is preferably made a reducing atmosphere. As the atmosphere gas, for example, a mixed gas of N₂ and H₂ which is further wetted is preferable.

When firing in a reducing atmosphere, the capacitor device body is preferably annealed. The annealing is treatment for reoxidizing the dielectric layers. This enables the IR life to be remarkably extended, so the reliability rises.

The oxygen partial pressure in the annealing atmosphere is preferably 10⁻⁷ to 10⁻⁶ atm. If the oxygen partial pressure is too low, reoxidiation of the dielectric layers will be difficult. If too high, the internal electrode layers will tend to oxidize.

The holding temperature of the annealing is preferably 500 to 1100°C. If the annealing temperature is too low, in general, the dielectric layers will be insufficiently oxidized, so the IR will be low and, further, the IR life will easily become shortened. On the other hand, if the holding temperature of the annealing is too high, the internal electrode layers will oxidize and the capacitance will fall. Further, the internal electrode layers will end up reacting with the dielectric material and the capacity-temperature characteristic will easily deteriorate, the IR fall, and the IR life fall.

Further, as the atmosphere gas for the annealing, for example, it is preferable to use wetted. N₂ gas etc.

In the binder removal treatment, firing, and annealing, the N₂ gas or mixed gas etc. may be wet by for example using a wetter. In this case, the water temperature is preferably 5 to 75°C or so.

The binder removal treatment, firing, and annealing may be performed consecutively or performed independently. When performing these consecutively, after the binder removal treatment, it is preferable to change the atmosphere without cooling, then raise the temperature to the holding temperature of firing and perform the firing, cool, then change the atmosphere when reaching the holding temperature of the annealing and perform the annealing.

The thus obtained capacitor device body is polished at its end faces by for example barrel polishing, sand blasting, etc., and printed or transferred and fired with terminal electrode paste to form the terminal electrodes 6, 8. The terminal electrode paste is preferably baked on, for example, in a mixed gas of N₂ and H₂ at, in the present embodiment, 600 to 800°C for approximately 10 minutes to 1 hour. In accordance with need, the terminal electrodes 6, 8 are plated on their surfaces to form covering layers.

The thus produced multilayer ceramic capacitor of the present invention is mounted by soldering etc. on a printed circuit board etc. which is then used for various types of electronic apparatuses etc.

The multilayer ceramic capacitor of the present embodiment has a composition satisfying the X8R characteristic as explained above and has dispersed concentrations of specific elements in the grain boundary phases. The CV value showing this dispersion can be made a predetermined value by changing the calcining conditions.

While an embodiment of the present invention was explained above, the present invention is not limited to the above-mentioned embodiment in any way and can be modified in various ways within a scope not departing from the gist of the present invention.

For example, in the above-mentioned embodiment, the calcining conditions were changed to keep the CV value in the predetermined range, but as another method, there is the method of changing the method of addition of additives. Further, as the electronic device according to the present invention, a multilayer ceramic capacitor was illustrated, but the electronic device according to the present invention is not limited to a multilayer ceramic capacitor and may be any device having dielectric layers formed by the above dielectric ceramic composition.

Further, in the above embodiment, the present invention was applied to a dielectric ceramic composition satisfying the X8R characteristic, but the present invention may also be applied to a dielectric ceramic composition satisfying the X7R characteristic. As the dielectric ceramic composition satisfying the X7R characteristic, a composition comprised of barium titanate including at least one oxide selected from MgO, CaO, SrO, and BaO, an ingredient functioning as a sintering aid, at least one oxide selected from rare earth elements, and at least one oxide selected from V₂O₅, MoO₃, and WO₃ may be mentioned. Other ingredients may also be included in accordance with need.

### EXAMPLES

Below, the present invention will be explained based on more detailed examples, but the present invention is not limited to these examples.

### Example 1

As the main ingredient material, BaTiO₃ was prepared, while as the sub ingredient materials, for MgO and MnO materials, the carbonates MgCO₃ and MnCO₃ were prepared. As the remaining sub ingredient materials, Al₂O₃, V₂O₅, Y₂O₃, Yb₂O₃, CaZrO₃, and (Ba_{0.6}Ca_{0.4}) SiO₃ (below, also called "BCG") were prepared. Note that CaZrO₃ was produced by wet mixing CaCO₃ and ZrO₃ by a ball mill for 16 hours, drying the result, firing it at 1150°C in the air, then wet crushing the result further by a ball mill for 24 hours. Further, the glass ingredient BCG was produced by wet mixing BaCO₃, CaCO₃, and SiO₂ by a ball mill for 16 hours, drying the result, firing it at 1150°C in the air, then wet crushing the result by a ball mill for 100 hours.

Next, these materials were weighed to give, with respect to 100 moles of BaTiO₃ in the composition after firing, 1 mole of MgO, 0.37 mole of MnO, 0.1 mole of V₂O₅, 2 moles of Y₂O₃, 1.75 moles of Yb₂O₃, and 1.5 moles of CaZrO₃. The second sub ingredients BCG and Al₂O₃ were blended as shown in Table 1. The amount weighed here for each sub ingredient material became the finally added amount. The weighed materials were wet mixed by a ball mill for 16 hours. The resultant slurry was dried, then the dried powder was divided into two equal amounts which were then calcined under the following two conditions for the Sample 2. For the other samples, the following calcining conditions were changed to change the CV values of the Si and/or Al contained in the second sub ingredient.

Conditions 1,
rate of temperature rise: 200°C/hour
holding temperature: 700°C
holding time: 2 hours
atmosphere: air
and
Conditions 2,
rate of temperature rise: 200°C/hour
holding temperature: 800°C
holding time: 2 hours
atmosphere: air.

The calcined powders were crushed and mixed to obtain a dielectric material. 100 parts by weight of the obtained dielectric material, 4.8 parts by weight of an acrylic resin, 100 parts by weight of ethyl acetate, 6 parts by weight of a mineral spirit, and 4 parts by weight of toluene were mixed by a ball mill to form a paste and thereby obtain a dielectric layer paste.

Next, 100 parts by weight of Ni particles with an average particle size of 0.4 µm, 40 parts by weight of an organic vehicle (8 parts by weight of ethyl cellulose dissolved in 92 parts by weight of butyl carbitol), and 10 parts by weight of butyl carbitol were kneaded by a triple roll to form a paste and thereby obtain an internal electrode layer paste.

The obtained dielectric layer paste was used to form sheets on a PET film by the doctor blade method, then was dried to form green sheets. At this time, the green sheets had a thickness of 4.5 µm. The internal electrode paste was printed over these, then the sheets were peeled off from the PET film. Next, these green sheets and protective green sheets (not printed with internal electrode layer paste) were stacked and pressed to obtain green chips.

Next, each green chip was cut to a predetermined size, treated to remove the binder, fired, and annealed under the following conditions to prepare a multilayer ceramic sintered body.

The binder removal treatment was performed under the following conditions:
rate of temperature rise: 60°C/hour,
holding temperature: 260°C,
holding time: 8 hours,
atmosphere: air.

The firing was performed under the following conditions:
rate of temperature rise: 200°C/hour,
holding temperature: 1240°C,
holding time: 6 hours,
oxygen partial pressure: 10⁻¹¹ atm,
atmosphere: H₂-N₂-H₂O gas.

The annealing was performed under the following conditions:
rate of temperature rise: 200°C/hour,
holding temperature: 1000°C,
holding time: 2 hours,
oxygen partial pressure: 10⁻⁷ atm,
atmosphere: wetted N₂ gas.

Note that the atmosphere gas of firing and annealing treatment was wet using a wetter with a water temperature of 35°C.

Each thus obtained sintered body was coated on its two surfaces with In-Ga to form terminal electrodes to thereby obtain a sample of the capacitor.

Each obtained capacitor had a size of 3.2 mm × 1.6 mm × 0.6 mm, four dielectric layers sandwiched between internal electrode layers, a thickness of each dielectric layer (interlayer thickness) of 3.5 µm, and a thickness of each internal electrode layer of 1.0 µm.

Next, the CV value was calculated by the following method for each obtained capacitor sample.

### CV Value

First, the obtained capacitor sample was sliced open perpendicular to the stacking direction and the cut surface was polished. Further, that polished surface was chemically etched, then examined by a scanning electron microscope (SEM). Using the code method and assuming the dielectric particles to be spherical in shape, 250 dielectric particles were measured for particle size. The average value of the particle size for the measured dielectric particles was defined as the average particle size D50. D50 was 0.30 µm.

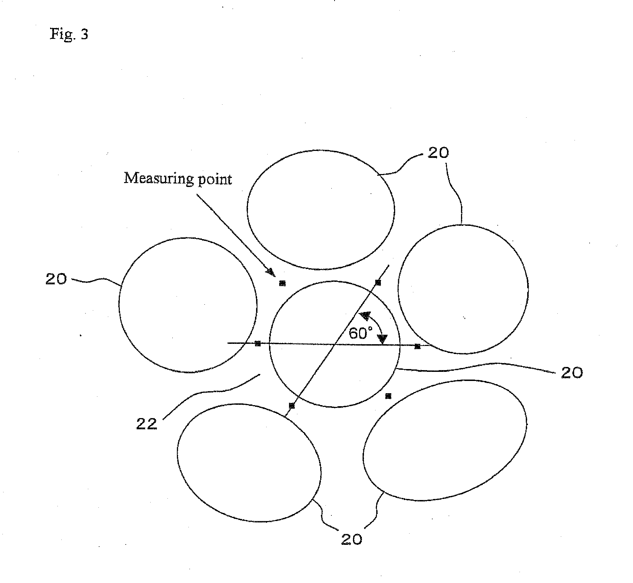

Next, as shown in FIG. 3, any one point is selected at the grain boundary phase near a dielectric particle exhibiting the same value as the average particle size D50. An energy dispersive type X-ray speotroanalyser attached to a transmission electron microscope (TEM) was used for point analysis of that point to measure the concentration distribution of the Si and/or Al. Further, the point was shifted 60 degrees and a similar point analysis performed to measure the concentration distribution of the Si and/or Al at six points around the dielectric particle. This measurement was conducted for 20 particles and the CV value for the Si and/or Al concentration was calculated. A CV value larger than 10% and less than 58% is in the range of the present invention. The results are shown in Table 1.

### Evaluation of Characteristics

Obtained capacitor samples were evaluated for the capacity-temperature characteristic and high temperature accelerated life.

For the capacity-temperature characteristic (TC), an obtained sample was measured for electrostatic capacity at -55°C to 150°C in temperature range. The electrostatic capacity was measured using a digital LCR meter (made by YHP, Model 4274A) under conditions of a frequency of 1 kHz and an input signal level of 1 Vrms. Further, the rate of change of the electrostatic capacity (ΔC/C., unit: %) under a temperature environment of 150°C, where the capacity-temperature characteristic deteriorated the most in the above temperature range, was calculated and it was judged if the X8R characteristic (-55 to 150°C, ΔC/C=±15% or less) was satisfied. If satisfied, "OK" was indicated, while if not satisfied, "NG" was indicated. The results are shown in Table 1.

The high temperature accelerated life (HALT) was evaluated by holding an obtained sample at 200°C in a state with 10V/µm of DC voltage applied and measuring the average life time. In the examples, the time for the insulation resistance to drop by one order of magnitude from the start of application of the voltage was defined as the "life". This high temperature accelerated life was evaluated for 10 capacitor samples. The evaluation criteria was 10 hours or more as "good". The results are shown in Table 1.

Table 1

**Table 1**

| Sample No. | Amount of addition of second sub ingredient (moles) | | CV value of concentration of Si and/or A element at grain boundary phases (%) | | High temperature accelerated life (hr) | Rate of change of capacity [1V/mm] | |
|---|---|---|---|---|---|---|---|
| | | | | | | ΔC/C20 (%) | |
| | BCG | Al₂O₃ | Si | Al | | 150°C | X8R |
| *1 | 3.0 | - | 7.8 | - | 10.5 | -17.6 | NG |
| 2 | 3.0 | - | 12.3 | - | 13.2 | -14.1 | OK |
| 3 | 3.0 | - | 20.1 | - | 22.3 | -12.1 | OK |
| 4 | 3.0 | - | 55.9 | - | 14.5 | -13.4 | OK |
| *5 | 3.0 | - | 60.4 | - | 3.4 | -12.1 | OK |
| *6 | - | 3.0 | - | 6.7 | 13.4 | -18.9 | NG |
| 7 | - | 3.0 | - | 15.4 | 16.7 | -14.8 | OK |
| 8 | - | 3.0 | - | 22.4 | 25.6 | -12.6 | OK |
| 9 | - | 3.0 | - | 56.0 | 18.7 | -13.9 | OK |
| *10 | - | 3.0 | - | 62.3 | 6.7 | -12.6 | OK |
| *11 | 1.5 | 1.5 | 8.1 | 7.1 | 14.7 | -18.1 | NG |
| 12 | 1.5 | 1.5 | 13.5 | 14.5 | 18.9 | -14.5 | OK |
| 13 | 1.5 | 1.5 | 20.9 | 23.4 | 30.1 | -12.3 | OK |
| 14 | 1.5 | 1.5 | 56.7 | 57.1 | 22.1 | -13.6 | OK |
| *15 | 1.5 | 1.5 | 61,4 | 63.1 | 7.8 | -12.4 | OK |

| | | | | | | | |
|---|---|---|---|---|---|---|---|
| (*) mark samples are comparative examples of the present invention. | | | | | | | |

Here, first sub ingredient: MgCO₃=1.0 mole
third sub ingredient: V₂O₅=0.1mole
fourth sub ingredient: Yb₂O₃=1.75 moles
fifth sub ingredient: Y₂O₃=2.0 moles
sixth sub ingredient: CaZrO₃=1.5 moles
seventh sub ingredient: MnCO₃=0.37 mole
The above amounts of addition are measured with respect to 100 moles of the main ingredient, respectively.

As shown in Table 1, it can be confirmed when the CV value of the Si and/or Al is in the range of the present invention, the XBR characteristic is satisfied and a good high temperature accelerated life is exhibited.

### Example 2

Except for selecting BCG and Ga₂O₃ as the second sub ingredient in the amounts shown in Table 2, the same procedure was followed as in Example 1 to prepare capacitor samples, calculate the CV values for Si and/or Ga, and evaluate the characteristics. The results are shown in Table 2.

**Table 2**

| Sample No. | Amount of addition of second sub ingredient (moles) | | CV value of concentration of Si and/or A element at grain boundary phases (%) | | High temperature accelerated life (hr) | Rate of change of capacity [1V/mm] | |
|---|---|---|---|---|---|---|---|
| | | | | | | ΔC/C20 (%) | |
| | BCG | Ga₂O₃ | Si | Ga | | 150°C | X8R |
| *16 | - | 3.0 | - | 6.1 | 12.0 | -17.2 | NG |
| 17 | - | 3.0 | - | 14.9 | 14.9 | -13.7 | OK |
| 18 | - | 3.0 | - | 21.7 | 23.6 | -11.8 | OK |
| 19 | - | 3.0 | - | 55.0 | 16.3 | -12.8 | OK |
| *20 | - | 3.0 | - | 61.3 | 4.8 | -11.3 | OK |
| *21 | 1.5 | 1.5 | 8.0 | 6.2 | 11.6 | -17.1 | NG |
| 22 | 1.5 | 1.5 | 13.1 | 13.6 | 14.0 | -13.2 | OK |
| 23 | 1.5 | 1.5 | 20.1 | 22.6 | 22.4 | -11.7 | OK |
| 24 | 1.5 | 1.5 | 56.8 | 56.1 | 15.1 | -12.1 | OK |
| *25 | 1.5 | 1.5 | 61.5 | 61.4 | 4.2 | -11.3 | OK |

| | | | | | | | |
|---|---|---|---|---|---|---|---|
| (*) mark samples are comparative examples of the present invention. | | | | | | | |

Here, the composition of the main ingredient and the compositions and amounts added of the sub ingredients other than the second sub ingredient are the same as in Table 1.

### Example 3

Except for selecting BCG and GeO₂ as the second sub ingredient in the amounts shown in Table 3, the same procedure was followed as in Example 1 to prepare capacitor samples, calculate the CV values for Si and/or Ge, and evaluate the characteristics. The results are shown in Table 3.

**Table 3**

| Sample No. | Amount of addition of second sub ingredient (moles) | | CV value of concentration of Si and/or A element at grain boundary phases (%) | | High temperature accelerated life (hr) | Rate of change of capacity [1V/mm] | |
|---|---|---|---|---|---|---|---|
| | | | | | | ΔC/C20 (%) | |
| | BCG | GeO₂ | Si | Ge | | 150°C | X8R |
| *26 | - | 3.0 | - | 6.5 | 12.6 | -18.4 | NG |
| 27 | - | 3.0 | - | 15.1 | 15.8 | -14.1 | OK |
| 28 | - | 3.0 | - | 22.1 | 24.2 | -11.7 | OK |
| 29 | - | 3.0 | - | 55.4 | 17.3 | -13.2 | OK |
| *30 | - | 3.0 | - | 61.8 | 5.2 | -12.0 | OK |
| *31 | 1.5 | 1.5 | 7.8 | 6.7 | 13.6 | -17.5 | NG |
| 32 | 1.5 | 1.5 | 13.7 | 14.0 | 17.8 | -13.6 | OK |
| 33 | 1.5 | 1.5 | 21.4 | 23.1 | 29.2 | -12.1 | OK |
| 34 | 1.5 | 1.5 | 57.7 | 56.4 | 20.7 | -12.4 | OK |
| *35 | 1.5 | 1.5 | 62.5 | 62.5 | 7.0 | -11.7 | OK |

| | | | | | | | |
|---|---|---|---|---|---|---|---|
| (*) mark samples are comparative examples of the present invention. | | | | | | | |

Here, the composition of the main ingredient and the compositions and amounts added of the sub ingredients other than the second sub ingredient are the same as in Table 1.

As clear from Tables 2 and 3, in the same way as Table 1, it can be confirmed when the CV value of the elements is in the range of the present invention, the X8R characteristic is satisfied and a good high temperature accelerated life is exhibited.

### Example 4

As dielectric ceramic compositions satisfying the X7R characteristic, the ingredients were weighed to give a composition after firing of, with respect to 100 moles of BaTiO₃, 2.4 moles of MgO, 0.1 mole of MnO, 0.02 mole of V₂O₅, 2.3 moles of Y₂O₃, and 1 mole of CaZrO₃. Except for selecting BCG and Al₂O₃ as the second sub ingredient in the amounts shown in Table 4, the same procedure was followed as in Example 1 to prepare capacitor samples, calculate the CV values for Si and/or Al, and evaluate the characteristics. The results are shown in Table 4.

Table 4

**Table 4**

| Sample No. | Amount of addition of second sub ingredient (moles) | | CV value of concentration of Si and/or A element at grain boundary phases (%) | | High temperature accelerated life (hr) | Rate of change of capacity [1V/mm] | |
|---|---|---|---|---|---|---|---|
| | | | | | | ΔC/C20 (%) | |
| | BCG | Al₂O₃ | Si | Al | | 150°C | X7R |
| *36 | 3.0 | - | 7.5 | - | 6.3 | -16.3 | NG |
| 37 | 3.0 | - | 12.1 | - | 10.2 | -13.2 | OK |
| 38 | 3.0 | - | 18.5 | | 14.3 | -11.0 | OK |
| 39 | 3.0 | - | 55.1 | - | 10.1 | -12.8 | OK |
| *40 | 3.0 | - | 58.7 | - | 1.5 | -11.2 | OK |
| *41 | - | 3.0 | | 7.0 | 7.2 | -15.8 | NG |
| 42 | - | 3.0 | - | 16.1 | 11.6 | -12.6 | OK |
| 43 | - | 3.0 | - | 23.0 | 17.5 | -10.5 | OK |
| 44 | - | 3.0 | - | 57.8 | 12.1 | -12.1 | OK |
| *45 | - | 3.0 | - | 65.0 | 2.5 | -10.5 | OK |
| *46 | 1.5 | 1.5 | 7.6 | 6.7 | 8.5 | -16.3 | NG |
| 47 | 1.6 | 1.6 | 12.1 | 13.9 | 12.6 | -13.0 | OK |
| 48 | 1.5 | 1.5 | 20.0 | 22.4 | 18.9 | -11.1 | OK |
| 49 | 1.5 | 1.5 | 56.0 | 56.4 | 13.8 | -12.5 | OK |
| *50 | 1.5 | 1.5 | 60.7 | 63.5 | 3.6 | -16.9 | OK |

| | | | | | | | |
|---|---|---|---|---|---|---|---|
| (*) mark samples are comparative examples of the present invention. | | | | | | | |

Here, first sub ingredient: MgCO₃=2,4 moles
third sub ingredient: V₂O₅=0.02mole
fourth sub ingredient: not added
fifth sub ingredient: Y₂O₃=2.3 moles
sixth sub ingredient: CaZrO₂=1 mole
seventh sub ingredient: MnCO₃=0.1 mole
The above amounts of addition are measured with respect to 100 moles of the main ingredient, respectively.

As clear from Table 4, in the same way as Tables 1 to 3, it can be confirmed when the CV value of the elements is in the range of the present invention, the X7R characteristic is satisfied and a good high temperature accelerated life is exhibited.

While the invention has been described with reference to specific embodiments chosen for purpose of illustration, it should be apparent that numerous modifications could be made thereto by those skilled in the art without departing from the basic concept and scope of the invention.

## Claims

1. A dielectric ceramic composition including dielectric particles and grain boundary phases present among these dielectric particles, wherein when measuring a concentration of Si and/or element "A" contained in said grain boundary phases (where, "A" is at least one element selected from cationic elements with an effective ion radius in sixfold coordination of 0.065 nm to 0.085 nm), the concentration of the Si and/or element "A" disperses depending on the position in the grain boundary phases, and the dispersion of the concentration of Si and/or element "A" at the grain boundary phases is, in terms of CV value, larger than 10% and less than 58%.

2. The dielectric ceramic composition as set forth in claim 1, wherein said element "A" is at least one element selected from Al, Cr, Ga, and Ge.

3. The dielectric ceramic composition as set forth in claim 1 or 2, wherein when calculating the average particle size of the dielectric particles forming the dielectric ceramic composition in form of D50, the concentration of said Si and/or element "A" at the grain boundary phases present around the dielectric particles exhibiting the average particle size D50 is measured.

4. An electronic device having dielectric-layers comprised of a dielectric ceramic composition as set forth in any one of claims 1 to 3.

5. A multilayer ceramic capacitor having a capacitor body including dielectric layers comprised of a dielectric ceramic composition as set forth in amy one of claims 1 to 3 and internal electrode layers alternately stacked.
